(19) Europäisches Patentamt
European Patent Office
Office européen des brevets

(11) **EP 3 440 326 B1**

(12) **EUROPÄISCHE PATENTSCHRIFT**

(45) Veröffentlichungstag und Bekanntmachung des Hinweises auf die Patenterteilung:
**19.02.2020 Patentblatt 2020/08**

(21) Anmeldenummer: **17711636.5**

(22) Anmeldetag: **16.03.2017**

(51) Int Cl.:
*F01N 13/10* (2010.01)   *B60R 13/08* (2006.01)
*F01N 13/14* (2010.01)   *F01N 13/18* (2010.01)
*F02B 77/11* (2006.01)

(86) Internationale Anmeldenummer:
**PCT/EP2017/056269**

(87) Internationale Veröffentlichungsnummer:
**WO 2017/174323 (12.10.2017 Gazette 2017/41)**

(54) **BEFESTIGUNGSVORRICHTUNG FÜR EIN ABSCHIRMTEIL, INSBESONDERE FÜR EIN HITZESCHILD SOWIE ABSCHIRMTEIL AUFWEISEND ZUMINDEST EINE BEFESTIGUNGSVORRICHTUNG**

FIXING DEVICE FOR A SHIELD, IN PARTICULAR A HEAT SHIELD AND HEAT SHIELD WITH AT LEAST ONE FIXING DEVICE

STUCTURE DE FIXATION POUR BLINDAGE THERMIQUE ET BLINDAGE THERMIQUE AVEC AU MOINS UNE STUCTURE DE FIXATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2016 DE 102016106150**

(43) Veröffentlichungstag der Anmeldung:
**13.02.2019 Patentblatt 2019/07**

(73) Patentinhaber: **ElringKlinger AG**
**72581 Dettingen/Erms (DE)**

(72) Erfinder: **HEISELBETZ, Gerald**
**90579 Langenzenn (DE)**

(74) Vertreter: **Oberdorfer, Jürgen**
**Patentanwalt**
**munique-ip**
**Isartorplatz 5**
**80331 München (DE)**

(56) Entgegenhaltungen:
DE-T2-602004 002 062    JP-A- 2013 130 139
JP-A- 2014 148 941    US-A1- 2013 034 377

**Beschreibung**

Die Erfindung betrifft eine Befestigungsvorrichtung für ein Abschirmteil, insbesondere ein Hitzeschild nach dem Oberbegriff des Anspruchs 1 sowie ein Abschirmteil.

Zur Abschirmung von Wärme, die beispielsweise von besonders heißen Bauteilen/Aggregaten von Kraftfahrzeugen abgestrahlt wird, ist es bekannt, zum Schutz angrenzender Bauteile, für die eine solche Wärmeabstrahlung schädlich wäre, Abschirmteile vorzusehen, die dazu ausgebildet sind, abgestrahlte Wärme von zu schützenden Bauteilen abzuhalten. Bei derartigen Abschirmteilen handelt es sich üblicherweise um flächige, dünnwandige Bauelemente, welche ein- oder mehrlagig ausgebildet sein können und üblicherweise aus Aluminium oder Stahlblech gegebenenfalls unter Zwischenlage von nichtmetallischen Dämmlagen hergestellt sind. Derartige Abschirmteile sind z. B. mit einem Abstand am hitzeabgebenden Bauteil, beispielsweise einem Abgaskrümmer, einem Turbolader, einem Motorblock oder einem Getriebeaggregat befestigbar. Solche Abschirmteile, die in der Fachwelt auch Hitzeschilde oder Wärmeabschirmteile genannt werden, sind neben der Wärmebelastung oftmals auch Vibrationen ausgesetzt, welche für ein Abschirmteil eine hohe mechanische Belastung darstellen. Insbesondere im Bereich von Befestigungspunkten, an denen das Abschirmteil beispielsweise an einem Heißteil angebracht ist, führen unerwünschte Vibrationen oftmals zu Beschädigungen des Abschirmteils, beispielsweise zur Bildung von Spannungsrissen.

Des Weiteren besteht das Problem, dass derartige Abschirmteile sich bei Erwärmung in erheblichem Maße ausdehnen können und somit zwischen den Befestigungsstellen des Abschirmteils zweckmäßiger Weise ein Ausgleich der auftretenden Wärmedehnungen vorzusehen ist.

Zur Erreichung dieser Ziele ist eine Vielzahl von Befestigungsvorrichtungen für Abschirmteile, insbesondere Hitzeschilder, aus dem Stand der Technik bekannt.

Eine Befestigungsvorrichtung für ein Abschirmteil ist beispielsweise aus der DE 60 2004 002 062 T2 bekannt. Eine solche Befestigungsvorrichtung weist ein Bundhülsenelement auf, wobei in einem Zwischenraum zwischen zwei Bünden ein Überbrückungselement gelagert ist, welches sich radial nach außen erstreckt und in einem radial äußeren Bereich mit einem Hitzeschild verbindbar ist. Das Überbrückungselement besitzt bezüglich der Bundhülse ein Radialspiel, so dass die Bundhülse in einer Radialrichtung verschieblich bzgl. des Überbrückungselements angeordnet ist. Die Bundhülse besitzt eine Durchgangsöffnung, durch die ein Befestigungsmittel, z. B. eine Schraube oder ein Bolzen, gesteckt werden kann, mittels dem eine Befestigung des Abschirmteils an einem Befestigungspartnerteil, z. B. dem Heißteil möglich ist.

Aus der JP 2013-130139 A ist eine gattungsgemäße Befestigungsvorrichtung bekannt. Eine weitere Befestigungsvorrichtung ist aus der JP 2014-148941 A bekannt.

Ausgehend von diesem Stand der Technik liegt der Erfindung die Aufgabe zugrunde, eine gattungsgemäße Befestigungsvorrichtung hinsichtlich ihrer Geräuschbildung unter Vibrationsbelastung, insbesondere bei Erreichen der maximal möglichen radialen Verschiebeposition der Hülse gegenüber dem Überbrückungselement, zu verbessern.

Weiterhin soll eine Befestigungsvorrichtung für ein Abschirmteil, insbesondere ein Hitzeschild angegeben werden, mit welcher an einer Befestigungsstelle in besonders hohem Maße eine Entkopplung des Abschirmteils hinsichtlich mechanischer Schwingungen von einem Befestigungspartnerteil sowohl in axialer als auch in radialer Richtung gelingt. Eine solche Befestigungsvorrichtung soll insbesondere als modulartige Baugruppe vormontierbar sein und leicht an eine große Bandbreite unterschiedlicher Blechdicken des Abschirmteils montierbar sein.

Diese Aufgaben werden mit einer Befestigungsvorrichtung mit den Merkmalen des Anspruchs 1 gelöst. Vorteilhafte Ausführungsformen sind in den Unteransprüchen angegeben.

Eine weitere Aufgabe der Erfindung ist es, ein optimiertes Abschirmteil anzugeben. Diese Aufgabe wird mit einem Abschirmteil mit den Merkmalen des Anspruchs 18 gelöst.

Eine Befestigungsvorrichtung zur schwingungsentkoppelnden Befestigung eines Abschirmteils an einem Befestigungspartnerteil weist auf:

- eine Bundhülse aufweisend zumindest einen Hülsenkern und zwei in einer Radialrichtung R bezüglich einer Mittelachse M der Bundhülse, nach außen vorstehende, in einer Axialrichtung A zueinander beabstandete Bünde, wobei die Bünde in Axialrichtung A zwischen sich einen Zwischenraum bilden und

- zumindest ein Überbrückungselement, welches mit seinem radialen Innenbereich im Zwischenraum angeordnet ist und mit einem radialen Außenbereich mit einem Abschirmteil verbindbar ist,

- wobei die Bundhülse eine Ausnehmung des Überbrückungselements mit einem Radialspiel s durchgreift und das Überbrückungselement bezüglich der Hülsenkerns radial verschieblich ist,

- wobei ein Dämpfungselement vorhanden ist, welches in Axialrichtung A zwischen den Bünden angeordnet ist und das Dämpfungselement in Radialrichtung R zwischen dem Hülsenkern und einem Radialanschlag des Überbrückungselements angeordnet ist und derart bemessen ist, dass die radiale Verschieblichkeit des Überbrückungselements bezüglich des Hülsenkerns auf ein gegenüber dem Radialspiel s geringeres, effektives Radialspiel s' begrenzt ist.

Das Vorsehen eines solchen Dämpfungselements bewirkt, dass bei einer radialen Verschiebung der Hülse relativ zu dem einen Überbrückungselement, das zumindest eine Überbrückungselement und die Hülse nicht in Radialrichtung hart aufeinander treffen können. Bevor dies bei einer entsprechend großen radialen Verschiebung der Hülse bezüglich des zumindest einen Überbrückungselements stattfinden kann, steht bereits das Dämpfungselement blockierend an und verhindert ein hartes und somit geräuschvolles Zusammentreffen der Hülse und des zumindest einen Überbrückungselements in Radialrichtung.

Erfindungsgemäß besitzt das zumindest eine Überbrückungselement den ersten Gleitabschnitt und zumindest einen weiteren Gleitabschnitt und stützt sich mit den Gleitabschnitten axial an zum Zwischenraum weisenden gegenüberliegenden Innenseiten der Bünde ab. Mit dieser Ausführungsform kann in einfacher Art und Weise eine axial definierte Führung des Überbrückungselements gegenüber der Bundhülse erreicht werden.

Das Dämpfungselement ist dabei zweckmäßiger Weise verformungsweicher ausgestaltet als die Bundhülse und/oder das zumindest eine Überbrückungselement. Somit ist mittels des Dämpfungselements sichergestellt, dass eine sanfte, geräuschlose oder mit sehr geringer Geräuschentwicklung verbundene Spielbegrenzung der Hülse bezüglich des Überbrückungselements nach Art eines Puffers sichergestellt ist.

In einer weiteren Ausführungsform ist das zumindest eine Überbrückungselement mit einem ersten Gleitabschnitt in einem Spalt zwischen dem Dämpfungselement und einem der Bünde radial verschieblich gelagert. Dies stellt eine definierte Führung des Überbrückungselements innerhalb des Zwischenraums in Axialrichtung sicher, wodurch gewährleistet ist, dass die Bundhülse gegenüber dem Überbrückungselement ebenfalls definiert in Axialrichtung geführt ist. Zudem kann das Dämpfungselement als Bestandteil einer axialen Festlegung des Überbrückungselements bezüglich der Bundhülse auch in Axialrichtung dämpfend wirken, wenn im montierten Zustand beispielsweise das Abschirmteil gegenüber der fest am Befestigungspartnerteil angebrachte Bundhülse, in Axialrichtung A in Schwingung versetzt ist. Außerdem ist es hierdurch möglich, das Überbrückungselement einlagig auszubilden und für ein solches einlagiges Überbrückungselement eine definierte Führung relativ zur Bundhülse zu gewährleisten.

In einer weiteren Ausführungsform der Erfindung ist der Radialanschlag des Überbrückungselements als ein Verbindungsabschnitt des Überbrückungselements ausgebildet, der die Gleitabschnitte miteinander verbindet. Alternativ, z. B. bei einem einlagigen Überbrückungselement verbindet der Verbindungsabschnitt den einen Gleitabschnitt des Überbrückungselements mit dem radialen Außenbereich des Überbrückungselements, mit dem das Überbrückungselement am Abschirmteil festlegbar ist.

In einer anderen Ausführungsform der Erfindung überlappen sich Berührbereiche zwischen den Gleitabschnitten und den Innenseiten in der Axialrichtung A gesehen. Eine solche Maßnahme trägt zu einem geringen Bauraumbedarf in der Radialrichtung R bei. Beispielsweise können bereits radial geringe Bundüberstände der Bünde über den Hülsenkern ausreichend sein.

Alternativ zur vorbeschriebenen Ausführungsform können sich die Berührbereiche in Axialrichtung A gesehen radial nicht überlappen oder gar einen radialen Abstand zueinander aufweisen. Eine solche Ausführungsform nimmt einen, im Vergleich zur vorbeschriebenen Ausführungsform, etwas größeren radialen Bauraumbedarf in Kauf, wobei jedoch vorteilhaft ist, dass eine Formgebung des Überbrückungselements, insbesondere als Stanzziehteil oder dergleichen vereinfacht ist.

In einer besonderen Ausführungsform begrenzt der Radialanschlag den Zwischenraum radial nach außen. Mit dieser Maßnahme gelingt es, den Zwischenraum nach außen wirksam abzuschotten, so dass die Verschmutzungsneigung des Zwischenraumes im Betrieb der Befestigungsvorrichtung oder eines Abschirmteils vermindert ist.

In einer vorteilhaften Ausgestaltung der Erfindung liegt das Dämpfungselement radial innen an einer dem Zwischenraum zugewandten Außenseite des Hülsenkerns an und ist zusammen mit der Bundhülse relativ zum Überbrückungselement radial verschieblich. Hierdurch ist durch eine geeignete Anordnung des Radialanschlages am Überbrückungselement in einfacher Art und Weise das begrenzte effektive Radialspiel s' vorwählbar. Beispielsweise können durch Auswahl unterschiedlicher Überbrückungselemente, deren Radialanschläge an unterschiedlichen radialen Positionen angeordnet sind, aus baugleichen Hülsen-/Dämpfungselement-Kombinationen Befestigungsvorrichtungen gebildet werden, die ein unterschiedliches effektives Radialspiel s' besitzen.

Alternativ zur vorgenannten Ausführungsform kann es zweckmäßig sein, das Dämpfungselement radial außen an einer dem Zwischenraum zugewandten Innenseite des Radialanschlages anliegen zu lassen und das effektive Radialspiel s' zwischen dem Dämpfungselement und dem Hülsenkern zu bilden. Somit ist das Dämpfungselement zusammen mit dem Überbrückungselement relativ zur Bundhülse radial verschieblich. In dieser Ausgestaltung können beispielsweise die Bundhülsen und die Überbrückungselemente als Standardbauteile mit gleichen geometrischen Abmessungen vorliegen. Verschiedene Befestigungsvorrichtungen, aufweisend verschiedene effektive Radialspiele s' können beispielsweise durch einfaches Abstimmen der geometrischen Außenabmessungen des Dämpfungselementes, insbesondere in Radialrichtung R gesehen, angepasst werden.

Im Bereich der Erfindung liegt es auch, das effektive Radialspiel s' ≤ 0 mm vorzusehen, so dass das Dämpfungselement radial spielfrei oder radial elastisch vorgespannt zwischen dem Hülsenkern und dem Radialanschlag sitzt. Bei einer derartigen Ausgestaltung beeinflusst die elastische Verformbarkeit und die Eigendämpfung des Dämpfungselements das Schwingungsübertragungsverhalten zwischen dem Überbrückungselement und der Bundhülse in Radialrichtung R. Besonders zweckmäßig ist diese Ausgestaltung wenn kein Schiebesitz der Bundhülse bezüglich des Überbrückungselements gewünscht ist.

Als Dämpfungselement kommt zweckmäßiger Weise ein Drahtgeflecht, Drahtgewirr oder Drahtgestrick aus einem Metalldraht oder aus einem Kunststoffdraht zum Einsatz. Alternativ kann das Dämpfungselement auch aus einem Metall- und/oder Kunststoffschaum ausgebildet sein.

Das Überbrückungselement ist zweckmäßiger Weise einlagig, z.B. aus Edelstahl, beispielsweise als Stanzbiegeteil oder als Stanzziehteil ausgebildet.

Alternativ kann das Überbrückungselement mehrlagig ausgebildet sein und zumindest eine erste Lage den ersten Gleitabschnitt und eine zweite Lage den zweiten Gleitabschnitt bilden. Dabei erscheint es insbesondere zweckmäßig, die Lagen des Überbrückungselements als Gleichteile auszubilden.

Vorteilhaft ist die zumindest eine Lage des Überbrückungselements aus einem Edelstahlblech mit einer Dicke von 0,2 mm bis 0,5 mm ausgebildet.

Zur Herstellung eines vormontierten Moduls ist es zweckmäßig, dass die Bundhülse das zumindest eine Überbrückungselement und das Dämpfungselement unverlierbar bündelt, so dass die Befestigungsvorrichtung als Modul vormontierbar und als vormontiertes, eine Einheit bildende Baugruppe in ein Aufnahmeloch des Abschirmteils einsetzbar ist.

Zur Festlegung der Befestigungsvorrichtung im Aufnahmeloch des Abschirmteils ist es zweckmäßig, dass das Überbrückungselement radial außerhalb der Bundhülse Verbindungselemente aufweist. Die Verbindungselemente sind beispielsweise in Form von Laschen ausgebildet, wobei die Laschen einstückig mit der einen Lage oder mit einer der mehreren Lagen des Überbrückungselements ausgebildet sind. Hierdurch gelingt es separate Verbindungsmittel einzusparen. Bei der Erfindung gemäß dieser Ausführungsform sind die Verbindungselemente integral mit dem Überbrückungselement ausgebildet.

Für ein sanfteres Auftreffen des Radialanschlages auf dem Dämpfungselement ist es zweckmäßig den der Radialanschlag im Querschnitt gesehen zumindest abschnittsweise um einen Winkel α zur Axialrichtung A geneigt anzuordnen.

Zweckmäßiger Weise hat im vorgenannten Fall das Dämpfungselement zumindest eine korrespondierend zum geneigten Radialanschlag ausgebildete Schrägfläche. Hier hat sich gezeigt, dass eine derartige Ausgestaltung besonders geräuschreduzierend wirkt, wenn es zu einem radialen Aufeinandertreffen des Überbrückungselements und des Dämpfungselements kommt.

Zur Verminderung des Verschleißes im Bereich der Berührzonen ist es zweckmäßig das Überbrückungselement und/oder die Innenseiten der Bünde mit Erhöhungen und/oder Vertiefungen zu versehen, so dass sich die Gleitabschnitte gegenüber den Bünden über Punkt- oder Linienberührung oder über definierte Gleitflächen gegeneinander abstützen. Vorteilhaft hierbei ist, dass der Reibkontakt zwischen dem Überbrückungselement und der oder den Innenseiten der Bünden verschmutzungsunempfindlicher ist, d. h., dass die für eine Verschiebung der Hülse relativ zum Überbrückungselement in Radialrichtung R erforderlichen Kräfte zur Überwindung des Reibkontaktes unabhängiger von in Betrieb gegebenenfalls auftretenden Verschmutzungen in den Berührzonen sind.

Im Folgenden wird die Erfindung anhand der Zeichnung beispielhaft näher erläutert. Es zeigen:

Figur 1: schematisiert eine perspektivische Ansicht auf ein erfindungsgemäßes Abschirmteil mit einer Mehrzahl von Befestigungsöffnungen zur Aufnahme einer erfindungsgemäßen Befestigungsvorrichtung;

Figur 2: das Abschirmteil gemäß Figur 1 in einem Querschnitt entlang der Linie A-A aus Figur 1 mit einer Befestigungsvorrichtung in einer ersten Ausführungsform;

Figur 3: den Schnitt entlang der Line A-A, mit einer Befestigungsvorrichtung in einer zweiten Ausführungsform;

Figur 4: den Schnitt entlang der Line A-A, mit einer Befestigungsvorrichtung in einer dritten Ausführungsform;

Figur 5: den Schnitt entlang der Line A-A, mit einer Befestigungsvorrichtung in einer vierten Ausführungsform;

Figur 6: den Schnitt entlang der Line A-A, mit einer Befestigungsvorrichtung in einer fünften Ausführungsform;

Figur 7: eine perspektivische Ansicht auf eine Befestigungsvorrichtung in einer der Ausführungsformen gemäß Figur 2 bis 6 in einer Vormontagestellung;

Figur 8: eine perspektivische Ansicht auf einen Ausschnitt eines Abschirmteils mit einer Befestigungsvorrichtung in einer der Ausführungsformen gemäß Figuren 2 bis 6 im montierten Zustand;

Figur 9: den Schnitt entlang der Line A-A, mit einer Befestigungsvorrichtung in einer sechsten Ausführungsform;

Figur 10: den Schnitt entlang der Line A-A, mit einer Befestigungsvorrichtung in einer siebten Ausführungsform;

Figur 11: eine perspektivische Ansicht auf eine Befestigungsvorrichtung gemäß Figuren 9 oder 10 in einer Vormontagestellung;

Figur 12: eine perspektivische Ansicht auf einen Ausschnitt eines Abschirmteils mit der Befestigungsvorrichtung gemäß Figuren 9 oder 10 im montierten Zustand;

Figur 13: den Schnitt entlang der Line A-A, mit einer Befestigungsvorrichtung in einer achten Ausführungsform;

Figur 14: den Schnitt entlang der Line A-A, mit einer Befestigungsvorrichtung in einer neunten Ausführungsform;

Figur 15: den Schnitt gemäß Figur 2, entlang der Line A-A, mit einer Befestigungsvorrichtung in einer zehnten Ausführungsform;

Figur 16: den Schnitt gemäß Figur 2, entlang der Line A-A, mit einer Befestigungsvorrichtung in einer elften Ausführungsform.

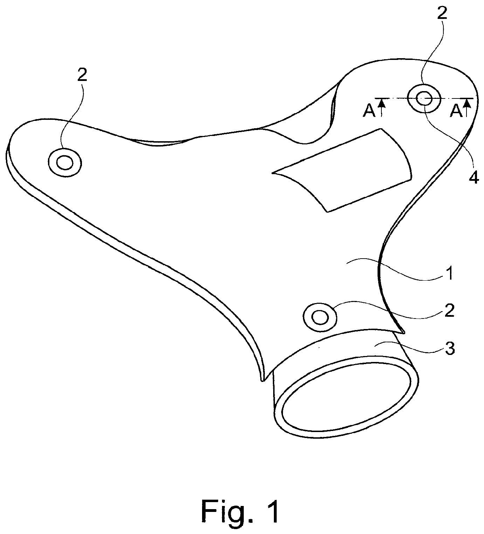

Figur 1 zeigt ein Abschirmteil 1, welches beispielsweise ein Hitzeschild ist. Das Abschirmteil 1 besitzt Befestigungsstellen 2, an denen das Abschirmteil 1 an einem Befestigungspartnerteil 3, z. B. einem Abgaskrümmer eines Kraftfahrzeuges, befestigbar ist. Derartige Abschirmteile 1 sind üblicherweise aus einem Metallwerkstoff, insbesondere einem Metallblech gebildet und ein- oder mehrlagig aufgebaut. Üblicherweise besitzen Abschirmteile 1 eine ausgedehnte dreidimensionale Raumform und sind beispielsweise in ihrer Raumform angenähert an das Befestigungspartnerteil 3 ausgebildet. Zwischen dem Befestigungspartnerteil 3 und dem Abschirmteil 1 ist bis auf die Befestigungsstellen 2 üblicherweise ein Luftspalt vorhanden, der derart groß bemessen ist, dass Schwingungen, die im Abschirmteil 1 auftreten, nicht zu einer Kollision mit dem Befestigungspartnerteil 3 führen. Das Abschirmteil 1 kann aus einem Stahlwerkstoff oder einem Aluminiumwerkstoff hergestellt sein. Neben einer wärmeabschirmenden Funktion haben derartige Abschirmteile 1 oftmals auch die Aufgabe, für eine akustische Dämmung von Geräuschquellen zu sorgen. Derartige Geräuschquellen können beispielsweise Turbolader sein. Abschirmteile 1 im Sinne der Erfindung können sowohl an einem Befestigungspartnerteil 3 befestigt sein welches die Wärme-/ Hitzequelle darstellt. Gleichwohl können Abschirmteile 1 auch an zu schützenden Bauteilen, z. B. der Karosserie befestigt sein. Solche Abschirmteile 1 sind üblicherweise einer hohen Temperaturwechselbelastung, die beispielsweise von -50° bis +900° oder darüber hinaus reichen kann, ausgesetzt. Bei einer räumlich relativ großen Ausdehnung solcher Abschirmteile 1 kommt es zwischen den Befestigungsstellen 2 durch Wärmedehnungseffekte zu nicht unerheblichen Abstandsänderungen zwischen den Befestigungsstellen 2. Ist beispielsweise eine Wärmeausdehnung des Befestigungspartnerteils 3 stärker ausgeprägt als eine Wärmedehnung des Abschirmteils 1, so muss zweckmäßigerweise an zumindest einer Befestigungsstelle 2 ein Schiebesitz vorgesehen werden, um unzulässig hohe thermische Spannungen im Abschirmteil 1 zu vermeiden. Außerdem soll das Abschirmteil 1 hinsichtlich ins Abschirmteil 1 eingetragener Schwingungen, sei es durch das Befestigungspartnerteil 3 oder beispielsweise durch Eigenschwingungen, bestmöglich vom Befestigungspartnerteil 3 entkoppelt sein. Zur schwingungsentkoppelnden Befestigung des Abschirmteils 1 an einem Befestigungspartnerteil 3 schlägt die Erfindung nachfolgend beispielhaft näher beschriebene Befestigungsvorrichtungen 5 vor, die in einem Aufnahmeloch 4 des Abschirmteils 1 montiert sind bzw. montierbar sind.

Alle nachfolgend beschriebenen Ausführungsformen einer erfindungsgemäßen Befestigungsvorrichtung 5 für ein Abschirmteil 1 besitzen eine Bundhülse 6 mit einem Hülsenkern 7.

Der Hülsenkern 7 besitzt eine Durchstecköffnung 80 für ein Befestigungsmittel, z. B. eine Schraube, mit dem die Bundhülse 6 bezüglich des Befestigungspartnerteils 3 festlegbar ist. Hierzu weist das Befestigungspartnerteil 3 zweckmäßigerweise ein Gewinde auf. Die Durchstecköffnung 80 besitzt eine Mittelachse M. Für die weitere Beschreibung der Ausführungsformen wird eine Radialrichtung R definiert, die orthogonal zur Mittelachse M ausgerichtet ist. Weiterhin wird eine Axialrichtung A definiert, welche parallel zur Mittelachse M verläuft. Als Umfangsrichtung U sei jede Richtung umlaufend um die Mittelachse M definiert, die in einem bestimmten radialen Abstand um die Mittelachse M verläuft.

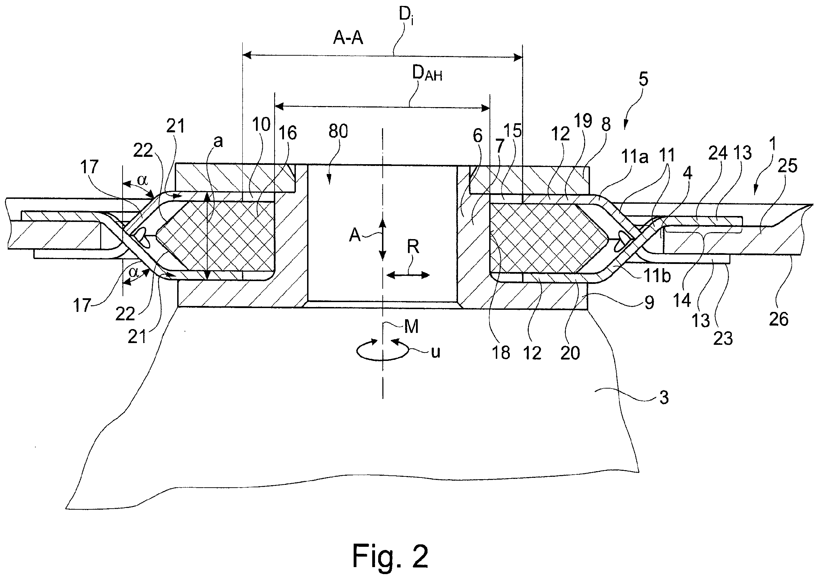

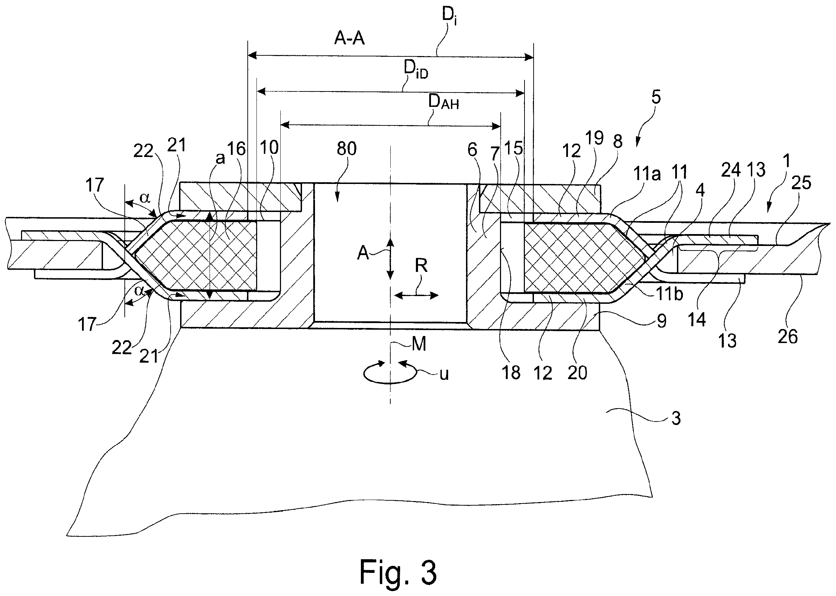

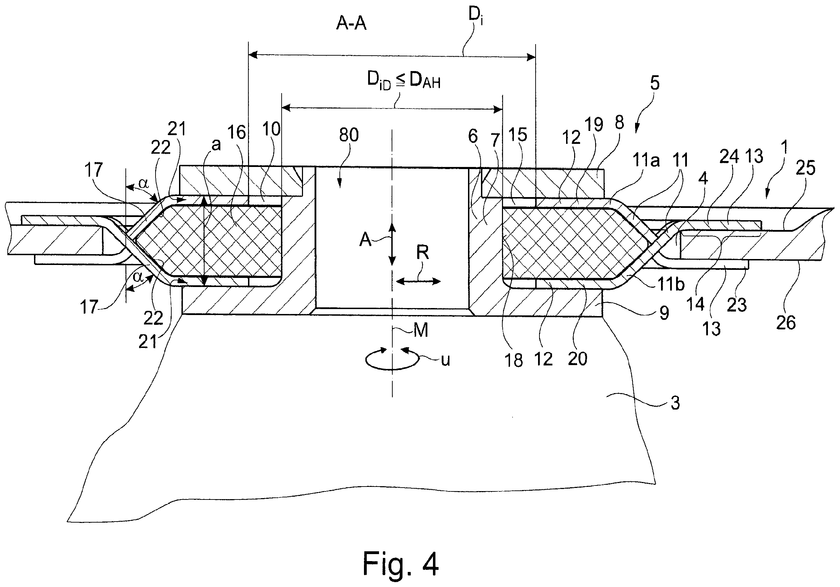

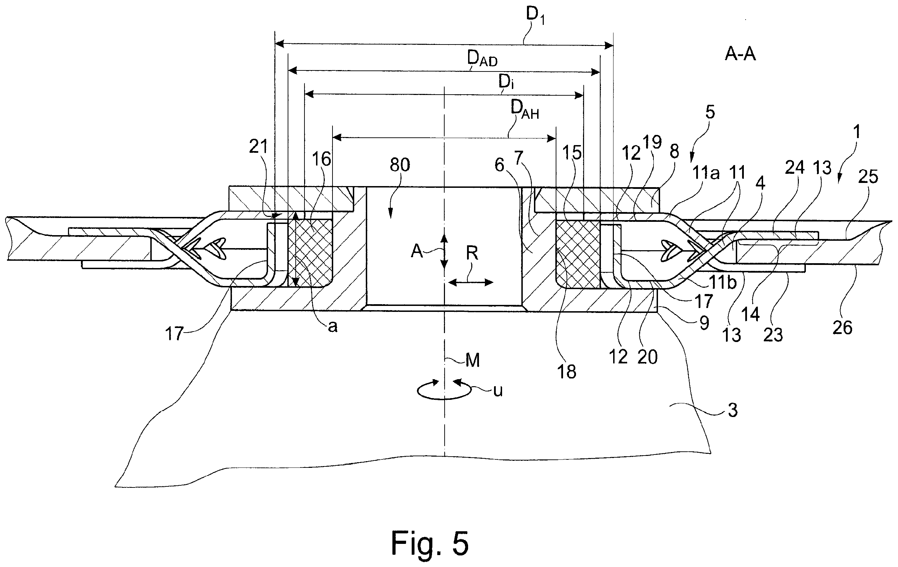

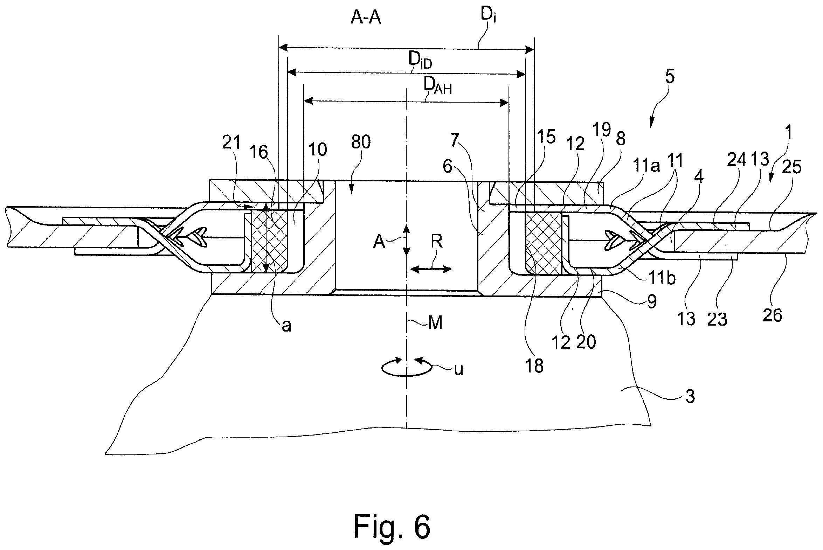

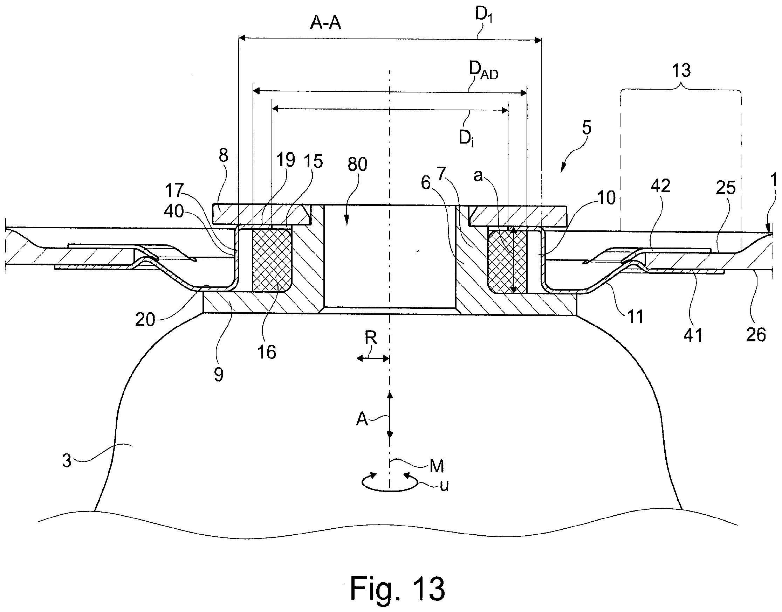

Die Bundhülse 6 weist außerdem zwei in der Radialrichtung R vom Hülsenkern 7 radial nach außen abgehende Bünde 8, 9 auf, wobei der erste Bund 8 und der zweite Bund 9 zwischen sich einen Abstand a in Axialrichtung A aufweisen. Die Bünde 8, 9 bilden somit zwischen sich einen Zwischenraum 10. Zur Verbindung der Bundhülse 6 mit dem Abschirmteil 1 besitzt die Befestigungsvorrichtung 5 ein Überbrückungselement 11, welches einteilig (vergleiche Ausführungsformen gemäß Figuren 13 bis 16) ausgebildet sein kann. In den Ausführungsformen gemäß Figuren 2 bis 12 ist das Überbrückungselement 11 zweiteilig aus einem ersten Teil 11a und einem zweiten Teil 11b gebildet. Ein radialer Innenbereich 12 des Überbrückungselements 11 ist im Zwischenraum 10 angeordnet. Ein radialer Außenbereich 13 des Überbrückungselements 11 ist mit einem Lochrand 14 des Aufnahmelochs 4 in Radialrichtung R, in Axialrichtung A und in Umfangsrichtung U fest verbindbar. Der Hülsenkern 7 durchsetzt eine Ausnehmung 15 des Überbrückungselements 11 mit einem Radialspiel s, sodass das Überbrückungselement 11 bezüglich des Hülsenkerns 7 in der Radialrichtung R innerhalb des Spiels s einen Schiebesitz bildend verschieblich ist. Das Radialspiel s zwischen dem Überbrückungselement 11 und dem Hülsenkern 7 ergibt sich zu

$$s = D_i - D_{AH},$$

wobei $D_i$ ein Innendurchmesser der Ausnehmung 15 ist, $D_{AH}$ ist ein Außendurchmesser des Hülsenkerns 7.

Im Zwischenraum 10 in der Axialrichtung A zwischen den Bünden 8, 9 ist ein Dämpfungselement 16 angeordnet. Das Dämpfungselement 16 ist in Radialrichtung R zwischen dem Hülsenkern 7 und einem Radialanschlag 17 des Überbrückungselements 11 angeordnet. Das Dämpfungselement 16 ist erfindungsgemäß derart bemessen, dass die radiale Verschieblichkeit des Überbrückungselements 11 bezüglich des Hülsenkerns 7, das heißt das Radialspiel s auf ein geringeres, effektives Radialspiel s' begrenzt ist. Dies bedeutet, dass bei einer Auslenkung der Bundhülse 6 aus einer Nulllage, wie sie in Figur 2 gezeigt ist, in Radialrichtung R das Dämpfungselement 16 mit dem Radialanschlag 17 sich radial abstützend in Kontakt gerät, bevor das Überbrückungselement 11, insbesondere mit der Lochstirnkante der Ausnehmung 15 mit einer Außenseite 18 des Hülsenkerns 7 in Kontakt gerät. Somit wirkt das Dämpfungselement 16 als Puffer und verhindert ein hartes Auftreffen des Überbrückungselements 11 auf dem Hülsenkern 7. Im Querschnitt gemäß Figur 2 erstrecken sich die Gleitabschnitte 19 und 20 im Wesentlichen in Radialrichtung R, wobei der erste Gleitabschnitt 19 gleitend mit dem ersten Bund 8 zusammenwirkt und der zweite Gleitabschnitt 20 gleitend mit dem zweiten Bund 9 zusammenwirkt. In Axialrichtung A gesehen zwischen den Gleitabschnitten 19 und 20 erstreckt sich das Dämpfungselement 16 und stützt bevorzugt die Gleitabschnitte 19 und 20 nach Art eines Abstandshalters in Axialrichtung A zueinander ab. In Axialrichtung A ist das Dämpfungselement 16 so bemessen, dass die Gleitabschnitte 19, 20 gegenüber dem Dämpfungselement 16 gleitend bewegbar sind.

Das Dämpfungselement 16 ist gegenüber den es umgebenden Bauteilen, mit denen es in Kontakt kommt oder in Kontakt ist, das heißt insbesondere im Vergleich zum Überbrückungselement 11, im Vergleich zur Bundhülse 6, insbesondere im Vergleich zum Hülsenkern 7 verformungsweicher ausgebildet. Es ist beispielsweise als Drahtgebilde aus einem Metalldraht ausgebildet und kann insbesondere ein Drahtgeflecht, ein Drahtgewirr, ein Drahtgestrick, ein Drahtgewebe oder ein Drahtgewirke sein. Für niedrige Temperaturbelastungen kann das Dämpfungselement 16 auch aus einem Kunststoffdraht ausgebildet sein. Alternativ dazu kann das Dämpfungselement 16 ein Metall- oder Kunststoffschaum sein. Wesentlich ist, dass das Dämpfungselement 16 weich abdämpfende puffernde Eigenschaften gegenüber den es umgebenden Materialien besitzt, sodass ein in Kontakt geraten des Dämpfungselements 16 mit es umgebenden Bauteilen aufgrund von auftretenden Vibrationen oder Verschiebungen keine oder nur unwesentliche Geräuschentwicklungen verursacht.

Durch die vorbeschriebene Bemessung des Dämpfungselements 16 insbesondere in Axialrichtung A sind außerdem die Gleitabschnitte 19, 20 des Überbrückungselements 11 je in einem Spalt 21 zwischen den Bünden 8,9 und dem Dämpfungselement 16 verschieblich gelagert sind. Durch diese Anordnung gelingt es, neben der vorbeschriebenen Dämpfungsfunktion in Radialrichtung R das Dämpfungselement 16 zusätzlich zur axialen Dämpfung und zur axialen Abstützung des Überbrückungselements 11 gegenüber den Bünden 8, 9 zu verwenden.

Der Radialanschlag 17 des Überbrückungselements 11 verläuft im Querschnitt gesehen in einem Winkel $\alpha$ schräggestellt zur Axialrichtung A. Korrespondierend zum schräg gestellten Radialanschlag 17 besitzt das Dämpfungselement 16 Schrägflächen 22, sodass sich das Dämpfungselement 16 in Radialrichtung R nach außen keilförmig verjüngt.

Im radialen Außenbereich 13 des Überbrückungselements 11 besitzt das erste Teil 11a eine Vielzahl von Laschen 23. Korrespondierend zu den Laschen 23 besitzt das zweite Teil 11b im radialen Außenbereich 13 eine Vielzahl von Laschen 24. Je zwei Laschen 23 des ersten Teils 11a bilden in Umfangsrichtung U gesehen zwischen sich eine Lücke, welche im zusammengebauten Zustand gemäß Figur 2 von einer Lasche 24 des zweiten Teils 11b durchgriffen ist. Umgekehrt bilden jeweils zwei Laschen 24 des zweiten Teils 11b in Umfangsrichtung U gesehen zwischen sich eine Lücke, die im montierten Zustand gemäß Figur 2 von einer Lasche 23 des ersten Teils 11a durchgriffen ist. Beispielsweise können so über den Umfang gesehen acht Laschen 23 des ersten Teiles 11a und acht Laschen 24 des zweiten Teils 11b gleichmäßig über den Umfang verteilt den Klemmsitz zum Abschirmteil 1 bilden. Die Laschen 23, 24 sind gegen sich gegenüberliegende Außenseiten 25 und 26 des Lochrandes 14 des Abschirmteils 1 gesetzt, sodass mittels der Laschen 23, 24 das Überbrückungselement 11 in Axialrichtung A, in Radialrichtung R und in Umfangsrichtung U fest mit dem Abschirmteil 1 verbunden ist.

Unter "fest" im oben genannten Sinne ist zu verstehen, dass im Betrieb des Abschirmteils 1 üblicherweise auftretende Kräfte in Radialrichtung R und Axialrichtung A sowie Momente um die Mittelachse M keine Relativbewegung in Axialrichtung A, Radialrichtung R oder in Umfangsrichtung U zwischen dem Überbrückungselement 11 und dem Abschirmteil 1 bewirken. Die Laschen 23, 24 bilden einen Klemmsitz bezüglich des Lochrandes 14 aus, sodass eine Relativbewegung innerhalb des durch das Dämpfungselement 16 reduzierten Spieles s' nur zwischen der Bundhülse 6 und dem Überbrückungselement 11 stattfindet. In der Ausführungsform der Befestigungsvorrichtung 5 gemäß Figur 2 wird bei einer solchen Relativbewegung in Radialrichtung R das Dämpfungselement 16 zusammen mit der Bundhülse 6 mitbewegt. Somit ergibt sich auch eine Relativbewegung zwischen dem Dämpfungselement 16 und dem Überbrückungselement 11 bzw. dessen radialen Innenbereichen 12, 13.

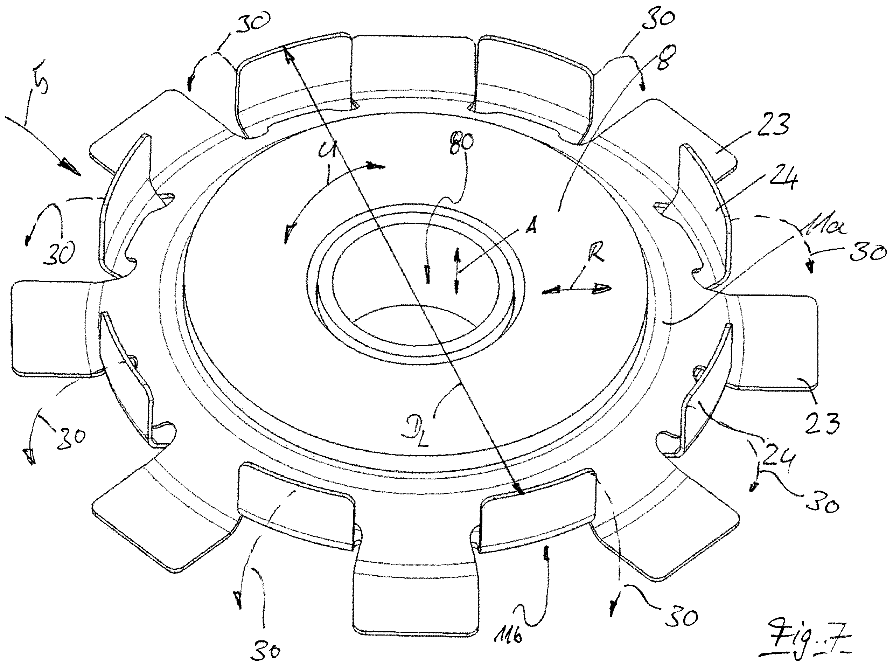

Die Bundhülse 6, das Überbrückungselement 11 und das Dämpfungselement 16 bilden ein vormontiertes Modul, wobei die Hülse 6 das Überbrückungselement 11 und das Dämpfungselement 16 bündelt, sodass die Einzelteile unverlierbar zusammengehalten sind. Eine solche modulartige Befestigungsvorrichtung 5 hat den Vorteil, dass sie als Ganzes in die Ausnehmung 4 des Abschirmteils 1 eingesetzt werden kann, ohne dass eine genaue Abfolge der Einzelteile an einem ggf. großflächigen und relativ unhandlichen Abschirmteil 1 vorgenommen werden muss. Zur Montage einer erfindungsgemäßen Befestigungsvorrichtung 5 befindet sich die Befestigungsvorrichtung 5 in einer Vormontagestellung gemäß Figur 7. In dieser Vormontagestellung sind die Laschen 24 des zweiten Teiles 11b des Überbrückungselements 11 in Axialrichtung A weisend nach oben abgebogen. Die Laschen 23 des ersten Teiles 11a erstrecken sich im Wesentlichen in Radialrichtung R.

Die Laschen 24 sind derart in Axialrichtung A abgebogen, dass ein Durchmesser $D_L$ kleiner ist als der Durchmesser der Ausnehmung 4 im Abschirmteil 1. Ist dies der Fall, kann die Befestigungsvorrichtung 5 von einer Seite 25 oder 26 her in Richtung der Axialrichtung A in die Ausnehmung 4 eingesteckt werden, sodass die Laschen 23 an der Außenseite 26 zu liegen kommen. In dieser Stellung durchragen die Laschen 24 die Ausnehmung 4. Sie können anschließend radial nach außen (Pfeilrichtung 30) umgebogen werden, sodass die Laschen 24 auf der ersten Außenseite 25 des Abschirmteils 1 zu liegen kommen. Die Laschen 24 und 23 werden anschließend axial verpresst, sodass im Bereich des Lochrandes 14 durch die Laschen 23 und 24 ein Klemmsitz für das Abschirmteil 1 gebildet ist. Die Presskraft wird derart bestimmt, dass für auftretende Betriebskräfte im Klemmsitz bei bestimmungsgemäßen Gebrauch des Abschirmteils 1 in Axialrichtung A und Radialrichtung R wie auch in Umfangsrichtung U ein Festsitz vorliegt.

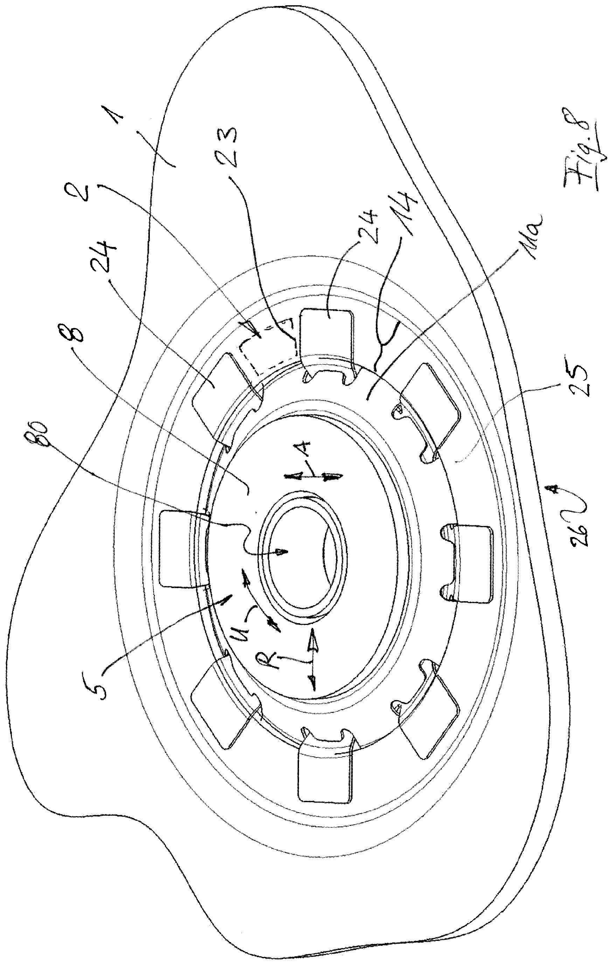

In Figur 8 ist eine Befestigungsvorrichtung 5 in einer der Ausführungsformen gemäß Figuren 2 bis 6 im montierten Zustand gezeigt. Die Laschen 24 sind gegen die Außenseite 25 des Abschirmteils 1 zusammen mit auf der gegenüberliegenden Außenseite 26 angeordneten Laschen 23 einen Klemmsitz bildend verpresst angeordnet. Stellvertretend für die Laschen 23 ist in der Figur 8 strichliert eine dieser Laschen dargestellt. Selbstverständlich ist jeder Lücke zwischen zwei Laschen 24 auf der gegenüberliegenden Außenseite 26 des Abschirmteils 1 eine Lasche 23 zugeordnet.

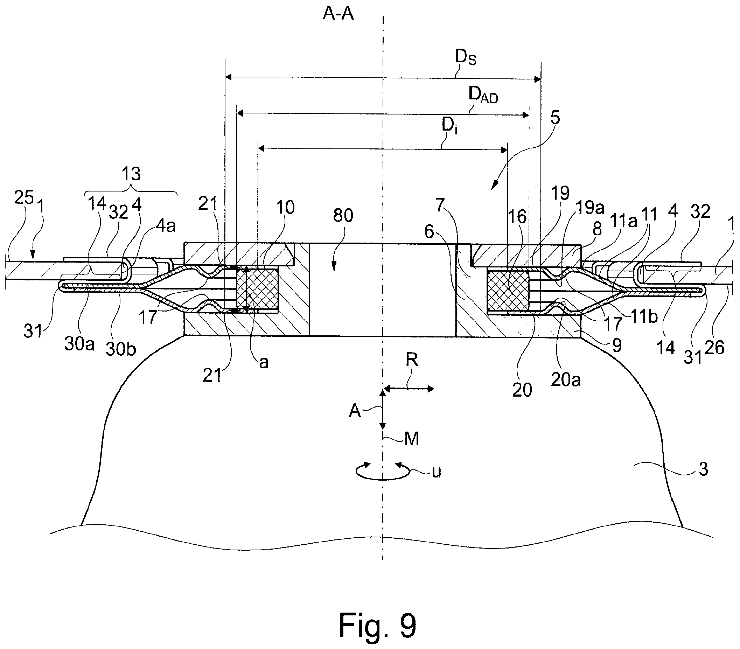

Eine weitere Ausführungsform der erfindungsgemäßen Befestigungsvorrichtung 5 ist in Figur 9 in einem Querschnitt dargestellt. Bei dieser Ausführungsform besitzt das erste Teil 11a und das zweite Teil 11b des Überbrückungselements 11 im Bereich des ersten Gleitabschnittes 19 und des zweiten Gleitabschnittes 20 eine in Umfangrichtung U umlaufende Sicke 19a, 20a, welche sich von den Bünden 8, 9 in Axialrichtung A weg in den Zwischenraum 10 erstrecken. Die Sicken 19a, 20a sind in Radialrichtung R etwa gleich beabstandet von der Mittelachse M angeordnet und liegen sich somit axial gegenüber.

Die Sicken 19a, 20a verengen den Zwischenraum 10 und wirken als Radialanschlag 17 für das Dämpfungselement 16. Radial innerhalb der Sicken 19a, 20a ist das Dämpfungselement 16 angeordnet und sitzt im Ausführungsbeispiel gemäß Figur 9 spielfrei um den Hülsenkern 7 angeordnet. Radial nach außen besitzt das Dämpfungselement 16 das effektive Radialspiel s' relativ zu den Sicken 19a, 20a. Um das effektive Radialspiel s' geringer auszubilden als das Radialspiel s des Überbrückungselements 11 relativ zum Hülsenkern 7 ($s = D_i - D_{AH}$) sind die Sicken 19a, 20a derart geeignet in radialer Entfernung von der Mittelachse M angeordnet, dass das Dämpfungselement 16 an den Sicken 19a, 20a anliegt, bevor das Überbrückungselement 11 den Hülsenkern 7 kontaktieren kann, wenn die Hülse in Radialrichtung R relativ zum Überbrückungselement verschoben wird.

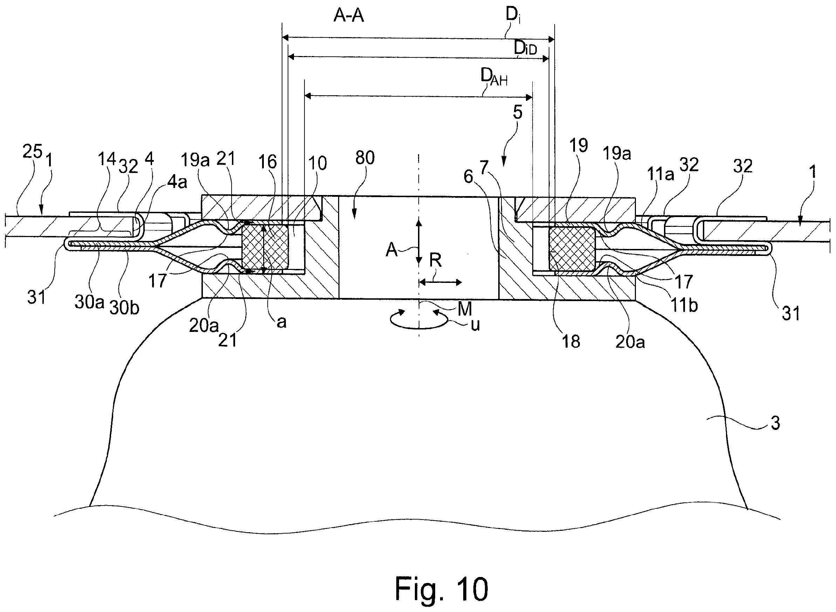

Im Folgenden wird anhand des Ausführungsbeispiels gemäß Figur 9 eine Alternative zur Verbindung der Befestigungsvorrichtung 5 am Abschirmteil 1 beschrieben. Diese betrifft eine geänderte Gestaltung des radialen Außenbereichs 13 des Überbrückungselements 11. Radial außerhalb des Aufnahmelochs 4 besitzen das erste Teil 11a und das zweite Teil 11b des Überbrückungselements 11 Anlagestege 30a, 30b. Die Anlagestege sind ebene Bereiche, mit denen die Teile 11a, 11b in Axialrichtung A gegeneinander gesetzt sind. Beide Anlagestege 30a, 30b der Teile 11a, 11b befinden sich im montierten Zustand auf einer Seite 26 des Abschirmteils 1. Der bezüglich des Abschirmteils 1 in Axialrichtung A weiter entfernt liegende Anlagesteg 30b ist radial außen einstückig mit laschenartigen Verlängerungen 31 versehen. Die laschenartigen Verlängerungen 31 sind um den Anlagesteg 30a des ersten Teils 11a herumgeschlagen, sodass das erste Teil 11a und das zweite Teil 11b mittels der Verlängerungen 31 miteinander verbunden sind. Die Verlängerungen 31 erstrecken sich radial einwärts bis innerhalb des Aufnahmelochs 4 und sind im weiteren Verlauf um eine Lochkante 4a des Aufnahmelochs 4 herumgeschlagen, wobei die laschenartigen Verlängerungen 31 mit einem freien Schenkel 32 auf der gegenüberliegenden Außenseite 25 des Abschirmteils 1 anliegen. In Umfangsrichtung U sind eine Vielzahl von laschenartigen Verlängerungen 31 einstückig mit dem zweiten Teil 11b verbunden. Bei dieser Art der Befestigungsvorrichtung 5 am Abschirmteil 1 ist von besonderem Vorteil, dass das Aufnahmeloch 4 durch die Befestigungsvorrichtung 5 in einer Draufsicht vollständig abgedeckt wird, sodass Wärmestrahlung vom Befestigungspartnerteil 3 nicht durch das Aufnahmeloch 4 hindurchtreten kann. Die vorbeschriebene Art der Befestigung der Befestigungsvorrichtung 5 am Abschirmteil 1 ist ohne weiteres auch für Ausführungsformen der Befestigungsvorrichtung 5 gemäß der Figuren 1 bis 6 einsetzbar. Umgekehrt ist die Befestigungslösung der Befestigungsvorrichtung 5 am Abschirmteil 1, wie sie im Zusammenhang mit den Figuren 2 bis 8 beschrieben wurde, ohne weiteres auch auf die Ausführungsformen gemäß Figuren 9 und 10 übertragbar.

Figur 10 zeigt eine gegenüber der Ausführungsform gemäß Figur 9 geringfügig abgewandelte Ausführungsform der erfindungsgemäßen Befestigungsvorrichtung 5. Bei dieser Ausführungsform besitzt das Dämpfungselement 16 ein radiales Spiel s' relativ zum Hülsenkern 7, welches sich zu

$$s' = D_{iD} - D_{AH}$$

ergibt.

Das Dämpfungselement 16 liegt radial außen an den Sicken 19a, 20a an und ist bezüglich des Überbrückungselements 11 ortsfest angeordnet. Die Bundhülse 6 ist innerhalb des Spiels s' relativ zum Dämpfungselement 16 und relativ zum Überbrückungselement 11 verschieblich gelagert, wobei die Bundhülse 6 bei einer radialen Verschiebung zuerst das Dämpfungselement 16 im Bereich der Außenseite 18 berührt, jedenfalls bevor das Überbrückungselement 11 den Hülsenkern 7 erreicht.

Die Befestigung einer solchen Befestigungsvorrichtung 5 am Abschirmteil 1 erfolgt analog zum Ausführungsbeispiel gemäß Figur 9 mittels laschenartiger Verlängerungen 31, welche an einem Teil 11b einstückig angeformt sind. Sie sind um das andere Teil 11a, dieses radial außen umgreifend herumgeschlagen und besitzen im weiteren Verlauf einen freien Schenkel 32 besitzen, der um das Abschirmteil 1 im Bereich des Aufnahmelochs 4 herum geschlagen ist, sodass ein im wesentlichen S-förmiger Verlauf vorliegt.

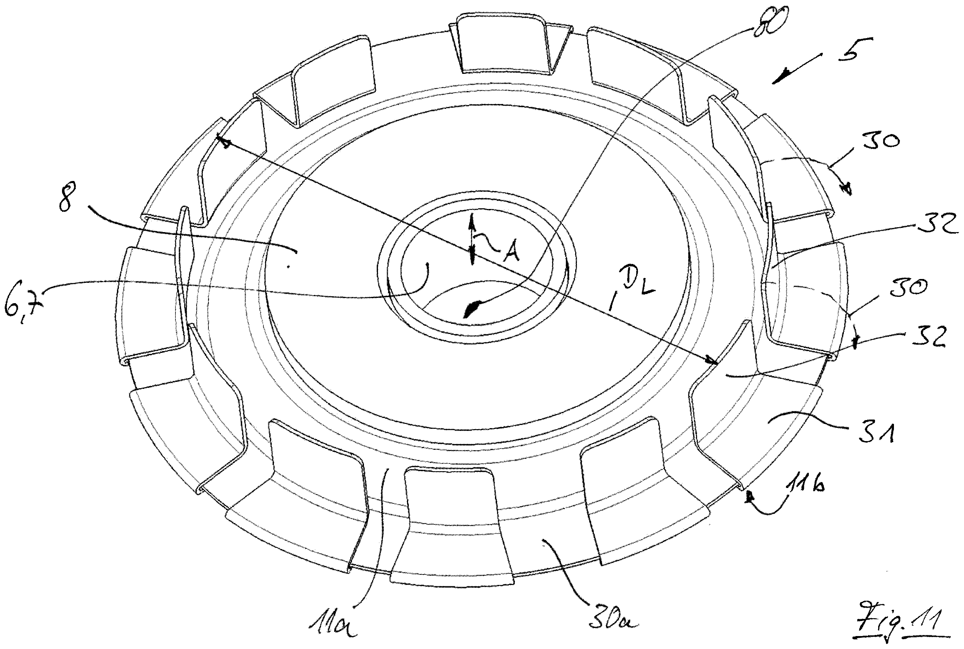

Anhand der Figur 11 wird nunmehr eine Vormontagestellung einer Befestigungsvorrichtung 5 in einer Ausführungsform gemäß Figuren 9 und 10 näher erläutert.

In dieser Vormontagestellung sind die laschenartigen Verlängerungen 31 des zweiten Teiles 11b um eine radial äußere Kante des Anlagesteges 30a des ersten Teiles 11a herumgeschlagen und umgebogen, sodass die laschenartigen Verlängerungen 31 das erste Teil 11a im Bereich des Anlagesteges 30a umgreifend mit dem zweiten Teil 11b verbinden.

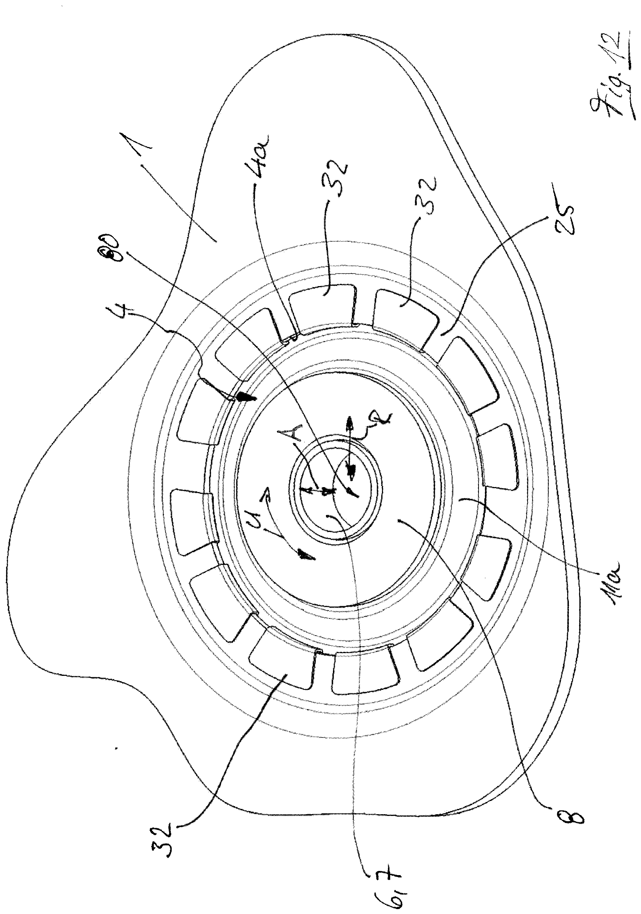

Die freien Schenkel 32 der laschenartigen Verlängerungen 31 sind in Axialrichtung A weisend abgebogen angeordnet. In dieser Stellung weisen gegenüberliegende Laschen zueinander einen Durchmesser $D_L$ auf, welcher kleiner ist als der Durchmesser des Aufnahmelochs 4, sodass die modulartig vormontierte Befestigungsvorrichtung 5 in der Axialrichtung A von der Seite 26 des Abschirmteils 1 her in das Aufnahmeloch 4 einsteckbar ist. Dieses Einstecken erfolgt bis die laschenartigen Verlängerungen 31 mit dem Bereich, mit dem sie die Anlagestege 30a umgreifen, an der Außenseite 26 des Abschirmteils 1 anliegen. In dieser Stellung durchragen die freien Schenkel 32 die Ausnehmung 4 und können in einer Pfeilrichtung 30 umgebogen werden, sodass sie auf der gegenüberliegenden Außenseite 25 des Abschirmteils 1 zur Anlage kommen und so die Befestigungsvorrichtung 5 im Abschirmteil 1 halten. Eine Endmontagestellung zeigt Figur 12, bei der deutlich sichtbar ist, dass die freien Schenkel 32 um die Lochkante 4a der Ausnehmung 4 herumgeschlagen sind und auf der Außenseite 25 des Abschirmteils 1 anliegen. Vorteilhafterweise sind die freien Schenkel 32 ebenfalls bezüglich des Abschirmteils 1 verpresst, sodass für üblicherweise im Betrieb eines Abschirmteils 1 auftretende Kräfte in Axialrichtung A, in Radialrichtung R oder in Umfangsrichtung U ein fester Sitz des Überbrückungselements 11, das heißt beider Teile 11a und 11b bezüglich des Abschirmteils 1 sichergestellt ist.

Bei einer weiteren Ausführungsform der erfindungsgemäßen Befestigungsvorrichtung ist das Überbrückungselement 11 einteilig und einlagig aus einem Metallblech ausgebildet. Im Folgenden werden anhand der Figuren 13 bis 16 einige Ausführungsbeispiele erläutert, denen gemeinsam ist, dass sie ein einlagiges und einteiliges Überbrückungselement 11 besitzen.

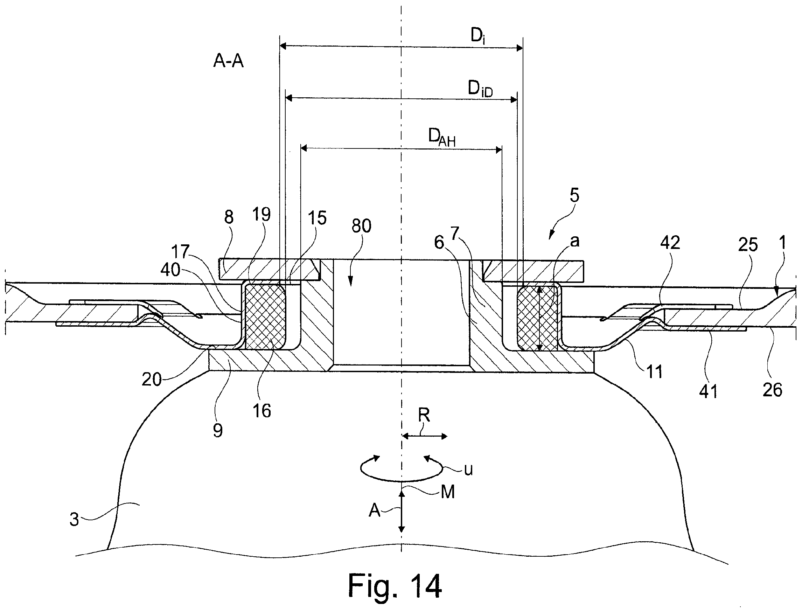

Das Überbrückungselement 11 besitzt bei den Ausführungsformen gemäß Figur 13 bis Figur 16 radial weiter innen liegend den ersten Gleitabschnitt 19, der mit dem ersten Bund 8 zusammenwirkt. Der zweite Gleitabschnitt 20 ist in Radialrichtung R weiter außen angeordnet und wirkt mit dem zweiten Bund 9 zusammen. Der erste Gleitabschnitt 19 und der zweite Gleitabschnitt 20 sind mit einem Verbindungsabschnitt 40 miteinander verbunden. Der Verbindungsabschnitt 40 wirkt zugleich als Radialanschlag 17 für das Dämpfungselement 16. Der Verbindungsabschnitt 40 ist in den Ausführungsformen gemäß Figur 13 und 14 in Axialrichtung A verlaufend ausgerichtet. Er überbrückt den Abstand a zwischen den Bünden 8, 9 der Bundhülse 6. Der Verbindungsabschnitt 40 besitzt einen Durchmesser $D_1$, welcher größer ist als der Außendurchmesser $D_{AD}$ des Dämpfungselements 16, sodass das verminderte effektive Radialspiel s' gebildet ist zu

$$s' = D_1 - D_{AD}.$$

Die Hülse 6 ist in Radialrichtung R gegenüber dem Überbrückungselement 11 radial verschieblich innerhalb des effektiven Radialspiels s' angeordnet. Der Verbindungsabschnitt 40 verschließt radial nach außen den Zwischenraum 10, sodass das Dämpfungselement 16 gut vor Verschmutzung geschützt ist. In seinem radialen Außenbereich besitzt das Überbrückungselement 11 eine Vielzahl von Laschen 41, 42, welche einstückig mit dem Überbrückungselement 11 verbunden sind. Die Laschen 41 und 42 sind in Umfangsrichtung U über den Umfang verteilt angeordnet, wobei die Laschen 41 im montierten Zustand gemäß der Figuren 13 bis 16 gegen die Außenseite 26 des Abschirmteils 1 gesetzt sind. Die Laschen 42 sind gegen die gegenüberliegende Außenseite 25 des Abschirmteils 1 gesetzt. Die Laschen 41, 42 sind zueinander so verpresst, dass sie einen Klemmsitz ausbilden, wobei im Betrieb üblicherweise auftretende Betriebskräfte zwischen dem Überbrückungselement 11 und dem Abschirmteil 1 keine Verlagerung des Überbrückungselements 11 in Axialrichtung A, Radialrichtung R oder in Umfangsrichtung U zu bewirken.

Im Ausführungsbeispiel gemäß Figur 13 sitzt das Dämpfungselement 16 spielfrei oder nahezu spielfrei um den Hülsenkern 7 herum angeordnet und besitzt das effektive Radialspiel s' relativ zum Verbindungsabschnitt 40. Der Verbindungsabschnitt 40, der bei dieser Ausführungsform auch als Radialanschlag 17 für das Dämpfungselement 16 wirkt, kann in Abwandlung der Ausführungsform gemäß Figur 13 auch um einen Winkel α zur Axialrichtung A schräggestellt angeordnet sein. Bei einer solchen Ausgestaltung kann korrespondierend zur Schrägstellung des Verbindungsabschnitts 40 das Dämpfungselement 16 eine Schrägfläche (nicht gezeigt in den Figuren 13 und 14) aufweisen.

Eine weitere Ausführungsform der erfindungsgemäßen Befestigungsvorrichtung 5 gemäß Figur 14 entspricht im Wesentlichen der Ausführungsform gemäß Figur 13. Im Unterschied hierzu ist das Dämpfungselement 16 so bemessen, dass es radial spielfrei am Radialanschlag 17, das heißt den Verbindungsabschnitt 40, anliegt. Das Dämpfungselement 16 besitzt sein effektives Radialspiel s' relativ zum Hülsenkern 7 der Bundhülse 6, wobei sich das relative Radialspiel s' zu

$$s´ = D_{iD} - D_{AH}$$

ergibt.

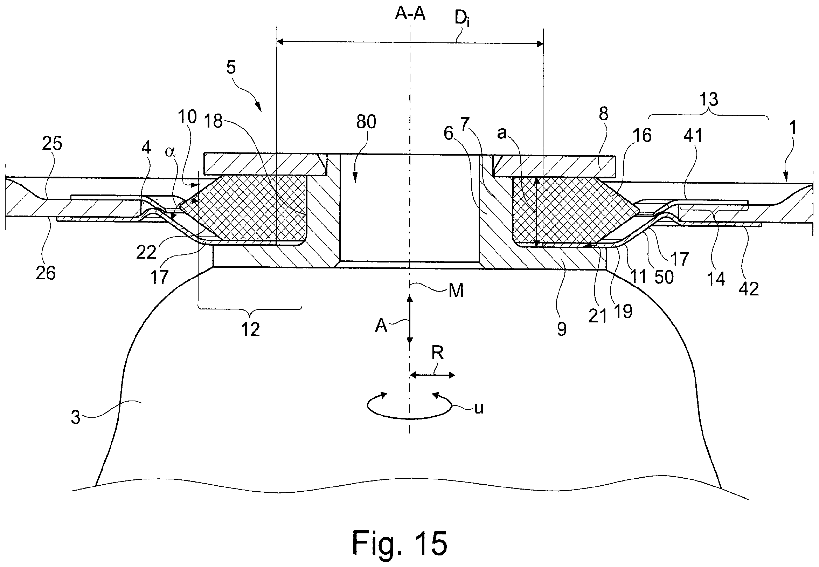

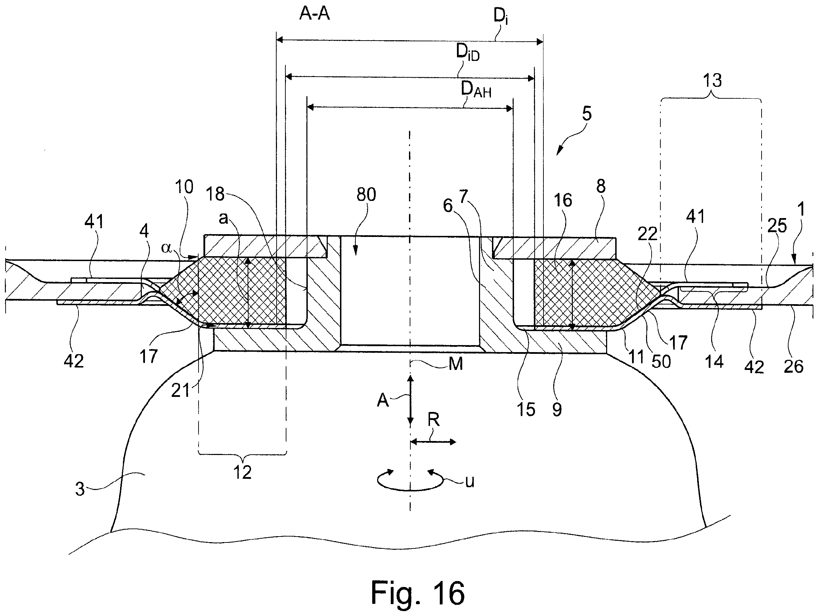

Bei weiteren Ausführungsformen gemäß Figur 15 und 16 (nicht zur Erfindung gehörend) ist das Überbrückungselement 11 einlagig ausgebildet und besitzt im Gegensatz zu den vorbeschriebenen Ausführungsformen lediglich einen ersten Gleitabschnitt 19, der im Spalt 21 zwischen dem Dämpfungselement 16 und einem der Bünde 9 gebildet ist. Der erste Gleitabschnitt 19 ist dabei in Radialrichtung R verschieblich zwischen dem Dämpfungselement 16 und dem Bund 9 geführt.

Radial außerhalb des ersten Gleitabschnittes 19 schließt sich ein Übergangsabschnitt 50 an, welcher den ersten Gleitabschnitt 19 mit dem radialen Außenbereich 13 des Überbrückungselements 11 verbindet.

Der Überbrückungsabschnitt 50 dient bei dieser Ausführungsform als Radialanschlag 17 für das Dämpfungselement 16. Der Radialanschlag 17 ist gegenüber der Axialrichtung A um einen Winkel α geneigt ausgebildet. Das Dämpfungselement 16 besitzt eine korrespondierende Schrägfläche 22, die mit dem Radialanschlag 17 zusammenwirken kann, derart, dass das verminderte Spiel s' zwischen dem Dämpfungselement 16 und dem Radialanschlag 17, das heißt dem Übergangsabschnitt 50 des Überbrückungselements 11 gebildet ist.

Diese Ausführungsform des Überbrückungselements 11 erlaubt es, das Überbrückungselement 11 in besonders einfacher Art und Weise herzustellen und als einlagiges Stanzbiegeteil auszubilden.

Der radiale Außenbereich 13 dieser Ausführungsform ist analog zum radialen Außenbereich 13 der vorbeschriebenen Ausführungsformen gemäß Figuren 13 und 14 ausgebildet und weist einstückig am Überbrückungselement 11 angeformte Laschen 41, 42 auf, die einen Klemmsitz für den Lochrand 14 des Abschirmteils 1 bilden.

In der Ausführungsform gemäß Figur 15 sitzt das Dämpfungselement 16 radial innen spielfrei oder nahezu spielfrei auf dem Hülsenkern 7 der Hülse 6, sodass das effektive Radialspiel s' zwischen dem Dämpfungselement 16 und dem Radialanschlag 17 gebildet ist.

Eine weitere Ausführungsform gemäß Figur 16 unterscheidet sich von der vorbeschriebenen Ausführungsform gemäß Figur 15 lediglich dadurch, dass das Dämpfungselement 16 derart bemessen ist, dass es radial außen am Radialanschlag 17, das heißt dem Verbindungsabschnitt 40, mit seiner Schrägfläche 22 anliegt und so bezüglich des Überbrückungselements 11 radial festgelegt ist. Das verminderte effektive Radialspiel s' wird dabei radial innen zwischen dem Dämpfungselement 16, das heißt dessen Innendurchmesser $D_{iD}$ und dem Außendurchmesser des Hülsenkerns 7, also dem Durchmesser $D_{AH}$, gebildet. Die Hülse 6 gleitet bei einer Radialverschiebung in Radialrichtung R mit dem Bund 8 auf dem Dämpfungselement 16 und mit dem Bund 9 relativ zum Überbrückungselement 11.

Allen vorbeschriebenen Ausführungsformen der erfindungsgemäßen Befestigungsvorrichtung 5 ist gemeinsam, dass die Hülse 6 mit dem Hülsenkern 7 und den Bünden 8, 9 das Überbrückungselement 11 und das Dämpfungselement 16 modulartig zusammenfasst und die genannten Teile unverlierbar miteinander bündelt.

Insoweit ist die erfindungsgemäße Befestigungsvorrichtung 5 vor dem Einsetzen in ein Abschirmteil 1 als Modul einfach vormontierbar und als Ganzes in Form einer Montageeinheit in das Abschirmteil 1 einsetzbar.

Die Hülse 6 mit den Bünden 8, 9 ist dabei in bekannter Art und Weise entweder einteilig und einstückig ausgebildet oder wie in den Ausführungsformen der Figuren zweiteilig ausgebildet. Die Bundhülse 6 weist dabei ein Einzelteil auf, welches den Hülsenkern 7 und einen der Bünde 8, 9 bildet und ist im Querschnitt somit in etwa L-förmig. Der zweite Bund 9 wird in Form einer Scheibe ausgebildet, welche mit dem zweiten Bauteil, welches den Hülsenkern 7 und den Bund 9 bildet, verbunden ist. Eine solche Verbindung kann in bekannter Art und Weise durch Verstemmen als formschlüssige Verbindung, beispielsweise durch Verschweißen oder Verlöten als stoffschlüssige Verbindung oder durch Pressen beispielsweise als reibschlüssige Verbindung, hergestellt werden. Für die Ausgestaltung der Hülsen 6 sind viele Varianten aus dem Stand der Technik bekannt.

Weiterhin ist allen vorbeschriebenen Ausführungsformen der erfindungsgemäßen Befestigungsvorrichtung 5 gemeinsam, dass der radiale Außenbereich 13 für die in Betrieb eines Abschirmteils 1 zu erwartenden Betriebskräfte am Abschirmteil 1 festgelegt ausgebildet ist. Es findet somit keine Relativbewegung zwischen dem Überbrückungselement 11 in Axial-, Radial- oder in Umfangsrichtung U im Betrieb statt. Hierdurch gelingt es, eventuell auf dem Abschirmblech bzw. dessen Außenseiten 25, 26 aufgebrachte Korrosionsschutzschichten nicht durch Relativbewegung zwischen metallischen Bauteilen zu zerstören.

Mit der vorliegenden Erfindung gelingt es außerdem einen Schiebesitz der Hülse 6 relativ zum Überbrückungselement 11, das heißt im eingebauten Zustand auch relativ zum Abschirmteil 1 zur Verfügung zu stellen, um thermische Ausdehnungen des Abschirmteils 1 ausgleichen zu können.

**Bezugszeichenliste**

| | |
|---|---|
| 1 | Abschirmteil |
| 2 | Befestigungsstelle |
| 3 | Befestigungspartnerteil |
| 4 | Aufnahmeloch |
| 4a | Lochkante |
| 5 | Befestigungsvorrichtung |
| 6 | Bundhülse |
| 7 | Hülsenkern |
| 8 | Erster Bund |
| 9 | Zweiter Bund |
| 10 | Zwischenraum |
| 11 | Überbrückungselement |
| 11a | erstes Teil |
| 11b | zweites Teil |
| 12 | Radialer Innenbereich des Überbrückungselements |
| 13 | Radialer Außenbereich des Überbrückungselements |
| 14 | Lochrand |
| 15 | Ausnehmung |
| 16 | Dämpfungselement |
| 17 | Radialanschlag |
| 18 | Außenseite des Hülsenkerns |
| 19 | Erster Gleitabschnitt |
| 19a | Sicke |
| 20 | Zweiter Gleitabschnitt |
| 20a | Sicke |
| 21 | Spalt |
| 22 | Schrägfläche |
| 23 | Laschen |
| 24 | Laschen |
| 25 | Außenseite |
| 26 | Außenseite |
| 30 | Pfeilrichtung |
| 30a | Anlagestege |
| 30b | Anlagestege |
| 31 | laschenartige Verlängerungen |
| 32 | Schenkel |
| 40 | Verbindungsabschnitt |
| 41 | Laschen |
| 42 | Laschen |
| 50 | Überbrückungsabschnitt |
| 80 | Durchstecköffnung |
| | |
| A | Axialrichtung |
| $D_1$ | Innendurchmesser |
| $D_{AD}$ | Außendurchmesser |
| $D_{AH}$ | Außendurchmesser |
| $D_i$ | Innendurchmesser |
| $D_{iD}$ | Innendurchmesser |
| $D_L$ | Durchmesser |
| M | Mittelachse |
| R | Radialrichtung |
| s | Radialspiel |
| s' | effektives Radialspiel |
| U | Umfangsrichtung |
| | |
| $\alpha$ | Winkel |

**Patentansprüche**

1. Befestigungsvorrichtung zur schwingungsentkoppelnden Befestigung eines Abschirmteils (1) an einem Befestigungspartnerteil (3)

   - mit einer Bundhülse (6) aufweisend zumindest einen Hülsenkern (7) und zwei in einer Radialrichtung (R) bzgl. einer Mittelachse (M) der Bundhülse (6) nach außen vorstehende, in einer Axialrichtung (A) zueinander beabstandete Bünde (8, 9), wobei die Bünde (8, 9) in Axialrichtung (A) zwischen sich einen Zwischenraum (10) bilden und

   - mit zumindest einem Überbrückungselement (11; 11a, 11b), welches mit seinem radialen Innenbereich (12) im Zwischenraum (10) angeordnet ist und mit seinem radialen Außenbereich (13) mit dem Abschirmteil (1) verbindbar ist,

   - wobei der Hülsenkern (7) eine Ausnehmung (15) des Überbrückungselements (11) mit einem Radialspiel (s) durchgreift und das zumindest eine Überbrückungselement (11) bezüglich des Hülsenkerns (7) radial verschieblich ist, wobei ein Dämpfungselement (16) vorhanden ist, welches in Axialrichtung (A) zwischen den Bünden (8, 9) angeordnet ist und das Dämpfungselement (16) in Radialrichtung (R) zwischen dem Hülsenkern (7) und einem Radialanschlag (17) des Überbrückungselements (11) angeordnet ist und derart bemessen ist, dass die radiale Verschieblichkeit des Überbrückungselements (11) bezüglich des Hülsenkerns (7) auf ein gegenüber dem Radialspiel (s) geringeres, effektives Radialspiel (s') begrenzt ist, **dadurch gekennzeichnet, dass** das zumindest eine Überbrückungselement (11) einen ersten Gleitabschnitt (19) und zumindest einen weiteren Gleitabschnitt (20) besitzt und sich mit den Gleitabschnitten (19, 20) axial an zum Zwischenraum (10) weisenden gegenüberliegenden Innenseiten der Bünde (8, 9) abstützt.

2. Befestigungsvorrichtung nach Anspruch 1, **dadurch gekennzeichnet, dass** das Dämpfungselement (16) im Vergleich zum zumindest einen Überbrückungselement (11) und-/oder im Vergleich zur Bundhülse (6) oder im Vergleich zum Hülsenkern (7) verformungsweicher ausgebildet ist.

3. Befestigungsvorrichtung nach Anspruch 1 oder 2, **dadurch gekennzeichnet, dass** das zumindest eine Überbrückungselement (11) mit dem ersten Gleitabschnitt (19) in einem Spalt (21) zwischen dem Dämpfungselement (16) und einem der Bünde (8, 9) radial verschieblich gelagert ist.

4. Befestigungsvorrichtung nach einem der vorangegangenen Ansprüche, **dadurch gekennzeichnet, dass** ein Verbindungsabschnitt (40) des Überbrückungselements (11), der die Gleitabschnitte (19, 20) miteinander verbindet oder den einen Gleitabschnitt (19) mit dem radialen Außenbereich (13) verbindet, als Radialanschlag (17) ausgebildet ist.

5. Befestigungsvorrichtung nach einem der vorangegangenen Ansprüche, **dadurch gekennzeichnet, dass** sich Berührbereiche zwischen den Gleitabschnitten (12, 20) und den Innenseiten der Bünde (8, 9) in Axialrichtung (A) gesehen radial überlappen.

6. Befestigungsvorrichtung nach einem der vorangegangenen Ansprüche 1 bis 4, **dadurch gekennzeichnet, dass** sich die Berührbereiche zwischen den Gleitabschnitten (12, 20) und den Innenseiten der Bünde (8, 9) in Axialrichtung (A) gesehen radial nicht überlappen oder einen radialen Abstand zueinander aufweisen.

7. Befestigungsvorrichtung nach einem der vorangegangenen Ansprüche, **dadurch gekennzeichnet, dass** der Radialanschlag (17) den Zwischenraum (10) radial nach außen begrenzt.

8. Befestigungsvorrichtung nach einem der vorangegangenen Ansprüche, **dadurch gekennzeichnet, dass** das Dämpfungselement (16) radial innen an einer dem Zwischenraum (10) zugewandten Außenseite (18) des Hülsenkerns (7) anliegt und zusammen mit der Bundhülse (6) relativ zum Überbrückungselement (11) radial verschieblich ist.

9. Befestigungsvorrichtung nach einem der vorangegangenen Ansprüche 1 bis 7, **dadurch gekennzeichnet, dass** das Dämpfungselement (16) radial außen an einer dem Zwischenraum (10) zugewandten Innenseite des Radialanschlages (17) anliegt und das effektive Radialspiel (s') zwischen dem Dämpfungselement (16) und dem Hülsenkern (7) gebildet ist, wobei das Dämpfungselement (16) zusammen mit dem Überbrückungselement (11) relativ zur Bundhülse (6) radial verschieblich ist.

10. Befestigungsvorrichtung nach einem der vorangegangenen Ansprüche, **dadurch gekennzeichnet, dass** das effektive Radialspiel (s') ≤ 0 ist, so dass das Dämpfungselement (16) radial spielfrei oder radial vorgespannt zwischen dem Hülsenkern (7) und dem Radialanschlag (17) sitzt.

11. Befestigungsvorrichtung nach einem der vorangegangenen Ansprüche, **dadurch gekennzeichnet, dass** das Dämpfungselement (16) ein Drahtgeflecht, Drahtgewirke, Drahtgewebe, Drahtgewirr oder Drahtgestrick aus einem Metalldraht oder aus einem Kunststoffdraht ist oder aus einem Metall- oder Kunststoffschaum ausgebildet ist.

12. Befestigungsvorrichtung nach einem der vorangegangenen Ansprüche, **dadurch gekennzeichnet, dass** das Überbrückungselement (11) einlagig als Stanzbiegeteil oder als Stanzziehteil ausgebildet ist oder das Überbrückungselement (11) mehrlagig ausgebildet ist und zumindest ein erstes Teil (11a) den ersten Gleitabschnitt (19) und ein zweites Teil (11b) den zweiten Gleitabschnitt (20) bildet.

13. Befestigungsvorrichtung nach einem der vorangegangenen Ansprüche, **dadurch gekennzeichnet, dass**

die Bundhülse (6) zumindest das Überbrückungselement (11) und das Dämpfungselement (16) unverlierbar bündelt, so dass die Befestigungsvorrichtung (5) als Modul vormontierbar und als einheitliche Baugruppe in ein Aufnahmeloch (4) des Abschirmteils (1) einsetzbar ist.

14. Befestigungsvorrichtung nach einem der vorangegangenen Ansprüche, **dadurch gekennzeichnet, dass**

das Überbrückungselement (11) radial außerhalb der Bundhülse (6) Verbindungselemente in Form einer Vielzahl von Laschen (23, 24) besitzt, wobei die Laschen (23, 24) einstückig mit dem einen Teil oder mit einem der mehreren Teile (11a, 11b) des Überbrückungselements (11) ausgebildet sind.

15. Befestigungsvorrichtung nach einem der vorangegangenen Ansprüche, **dadurch gekennzeichnet, dass**

der Radialanschlag (17) im Querschnitt gesehen zumindest abschnittsweise um einen Winkel ($\alpha$) zur Axialrichtung (A) geneigt angeordnet ist.

16. Befestigungsvorrichtung nach Anspruch 16, **dadurch gekennzeichnet, dass**

das Dämpfungselement (16) zumindest eine korrespondierend zum geneigten Radialanschlag (17) ausgebildete Schrägfläche (22) besitzt.

17. Befestigungsvorrichtung nach einem der vorangegangenen Ansprüche, **dadurch gekennzeichnet, dass**

im Bereich der Gleitabschnitte (19, 20) das Überbrückungselement (11) und/oder die Innenseiten der Bünde (8, 9) Erhöhungen und/oder Vertiefungen aufweisen, so dass sich die Gleitabschnitte (19, 20) gegenüber den Bünden (8, 9) über Punkt- oder Linienberührung oder über definierte Gleitflächen gegeneinander abstützen.

18. Abschirmteil aufweisend zumindest eine Befestigungsvorrichtung nach einem der Ansprüche 1 bis 17.

**Claims**

1. A fastening device for fastening a shielding part (1) to a fastening partner part (3) in a vibration-decoupled manner,

- having a collar sleeve (6), which has at least one sleeve core (7) and two collars (8, 9) that protrude outward in a radial direction (R) with respect to a center axis (M) of the collar sleeve (6) and are spaced apart from each other in an axial direction (A), wherein the collars (8, 9) form an intermediate space (10) between themselves in the axial direction (A), and
- having at least one bridging element (11; 11a, 11b), the radially inner region (12) of which is positioned in the intermediate space (10) and the radially outer region (13) of which can be connected to the shielding part (1),
- wherein the sleeve core (7) extends through a cut-out (15) of the bridging element (11) with a radial play (s) and the at least one bridging element (11) can be moved radially relative to the sleeve core (7), wherein

a damping element (16) is present, which is positioned between the collars (8, 9) in the axial direction (A) and the damping element (16) is positioned between the sleeve core (7) and a radial stop (17) of the bridging element (11) in the radial direction (R) and is dimensioned in such a way that the radial mobility of the bridging element (11) relative to the sleeve core (7) is limited to an effective radial play (s') smaller than the radial play (s), **characterized in that** the at least one bridging element (11) has a first sliding section (19) and at least one other sliding section (20) and is supported with the sliding sections (19, 20) axially against opposing insides of the collars (8, 9) facing toward the intermediate space (10) .

2. The fastening device according to claim 1, **characterized in that**

the damping element (16) is embodied as more deformable in comparison to the at least one bridging element (11) and/or in comparison to the collar sleeve (6) or in comparison to the sleeve core (7).

3. The fastening device according to claim 1 or 2, **characterized in that**

the at least one bridging element (11) is supported in a radially movable fashion with the first sliding section (19) in a gap (21) between the damping element (16) and one of the collars (8, 9).

4. The fastening device according to one of the preceding claims, **characterized in that**

a connecting section (40) of the bridging element (11), which connects the sliding sections (19, 20) to each other or connects the one sliding section (19) to the radially outer region (13), is embodied as a radial stop (17).

5. The fastening device according to one of the preceding claims, **characterized in that**

viewed in the axial direction (A), contacting regions between the sliding sections (12, 20) and the insides of the collars (8, 9) overlap each other radially.

**6.** The fastening device according to one of the preceding claims 1 to 4, **characterized in that** viewed in the axial direction (A), the contacting regions between the sliding sections (12, 20) and the insides of the collars (8, 9) do not overlap radially or are spaced radially apart from each other.

**7.** The fastening device according to one of the preceding claims, **characterized in that** the radial stop (17) delimits the intermediate space (10) toward the radial outside.

**8.** The fastening device according to one of the preceding claims, **characterized in that** on the radial inside, the damping element (16) rests against an outside (18) of the sleeve core (7) facing the intermediate space (10) and, together with the collar sleeve (6), is able to move radially relative to the bridging element (11).

**9.** The fastening device according to one of the preceding claims 1 to 7, **characterized in that** on the radial outside, the damping element (16) rests against an inside of the radial stop (17) facing the intermediate space (10) and the effective radial play (s') is formed between the damping element (16) and the sleeve core (7), with the damping element (16) and the bridging element (11) together being able to move radially relative to the collar sleeve (6).

**10.** The fastening device according to one of the preceding claims, **characterized in that** the effective radial play (s') is $\leq 0$ so that the damping element (16) is positioned between the sleeve core (7) and the radial stop (17) without radial play or in a radially prestressed manner.

**11.** The fastening device according to one of the preceding claims, **characterized in that** the damping element (16) is a wire mesh, wire crochet, wire weave, wire tangle, or wire knit made of a metal wire or plastic wire or is composed of a metallic or plastic foam.

**12.** The fastening device according to one of the preceding claims, **characterized in that** the bridging element (11) is embodied in one layer as a stamped and bent part or as a stamped and drawn part or the bridging element (11) is embodied as multilayered and at least one first part (11a) constitutes the first sliding section (19) and a second part (11b) constitutes the second sliding section (20).

**13.** The fastening device according to one of the preceding claims, **characterized in that** the collar sleeve (6) bundles at least the bridging element (11) and the damping element (16) in captive fashion so that the fastening device (5) can be preassembled as a module and can be inserted as a single unit into a receiving hole (4) of the shielding part (1).

**14.** The fastening device according to one of the preceding claims, **characterized in that** radially outside the collar sleeve (6), the bridging element (11) has connecting elements in the form of a plurality of tabs (23, 24), the tabs (23, 24) being embodied of one piece with the one part of the bridging element (11) or embodied of one piece with one of the plurality of its parts (11a, 11b).

**15.** The fastening device according to one of the preceding claims, **characterized in that** viewed cross-sectionally, the radial stop (17), at least in some sections, is positioned inclined at an angle ($\alpha$) relative to the axial direction (A).

**16.** The fastening device according to claim 16, **characterized in that** the damping element (16) has at least one oblique surface (22) embodied so that it corresponds to the inclined radial stop (17).

**17.** The fastening device according to one of the preceding claims, **characterized in that** the bridging element (11) and/or the insides of the collars (8, 9) have raised areas and/or recesses in the region of the sliding sections (19, 20) so that the sliding sections (19, 20) and the collars (8, 9) are supported against each other by means of a point contact or linear contact or by means of defined sliding surfaces.

**18.** A shielding part having at least one fastening device according to one of claims 1 to 17.

**Revendications**

**1.** Dispositif de fixation pour la fixation avec découplage des vibrations d'une pièce de protection (1) sur une pièce de fixation complémentaire (3),

- comportant un manchon à collerettes (6), comportant au moins un noyau de manchon (7) et deux collerettes (8, 9) faisant saillie vers l'extérieur dans une direction radiale (R) ou selon un axe central (M) du manchon à collerettes (6) et espacées l'une de l'autre dans une direction axiale (A), les collerettes (8, 9) formant entre elles un interstice (10) dans la direction axiale (A), et
- comportant un élément de pontage (11) qui est disposé avec sa zone radialement intérieure (12) dans l'interstice (10) et qui peut être relié avec sa zone radialement extérieure (13) à la pièce de protection (1),

- dans lequel le noyau de manchon (7) traverse un évidement (15) de l'élément de pontage (11) avec un jeu radial (s), et l'élément de pontage (11) est déplaçable radialement par rapport au noyau de manchon (7),

dans lequel est prévu un élément d'amortissement (16) qui est disposé dans la direction axiale (A) entre les collerettes (8, 9), et l'élément d'amortissement (16) est disposé dans la direction radiale (R) entre le noyau de manchon (7) et une butée radiale (17) de l'élément de pontage (11) et est dimensionné de telle manière que la capacité de déplacement radial de l'élément de pontage (11) par rapport au noyau de manchon (7) est limitée à un jeu radial effectif (s') réduit par rapport au jeu radial (s),

**caractérisé en ce que**

ledit au moins un élément de pontage (11) présente une première portion de glissement (19) et au moins une autre portion de glissement (20) et prend appui avec les portions de glissement (19, 20) axialement contre des faces intérieures opposées des collerettes (8, 9), dirigées vers l'interstice (10).

2. Dispositif de fixation selon la revendication 1, **caractérisé en ce que** l'élément d'amortissement (16) est conçu pour être plus souple en déformation par comparaison dudit au moins un élément de pontage (11) et/ou par comparaison au manchon à collerettes (6) ou par comparaison au noyau de manchon (7).

3. Dispositif de fixation selon la revendication 1 ou 2, **caractérisé en ce que** ledit au moins un élément de pontage (11) est monté avec la première portion de glissement (19) de manière radialement déplaçable dans un intervalle (21) entre l'élément d'amortissement (16) et l'une des collerettes (8, 9).

4. Dispositif de fixation selon l'une des revendications précédentes, **caractérisé en ce que** une portion de liaison (40) de l'élément de pontage (11), qui relie les portions de glissement (19, 20) l'une à l'autre ou qui relie une portion de glissement (19) à la zone radialement extérieure (13), est réalisée sous forme de butée radiale (17).

5. Dispositif de fixation selon l'une des revendications précédentes, **caractérisé en ce que** des zones de contact entre les portions de glissement (12, 20) et les faces intérieures des collerettes (8, 9) se chevauchent en direction axiale (A), vues radialement.

6. Dispositif de fixation selon l'une des revendications précédentes, **caractérisé en ce que** les zones de contact ne se chevauchent pas radialement ou présentent une distance radiale les unes des autres.

7. Dispositif de fixation selon l'une des revendications précédentes, **caractérisé en ce que** la butée radiale (17) délimite l'interstice (10) radialement vers l'extérieur.

8. Dispositif de fixation selon l'une des revendications précédentes, **caractérisé en ce que** l'élément d'amortissement (16) s'appuie radialement à l'intérieur contre une face extérieure (18) du noyau de manchon (7) dirigée vers l'interstice (10) et est radialement déplaçable par rapport à l'élément de pontage (11), conjointement avec le manchon à collerettes (6).

9. Dispositif de fixation selon l'une des revendications précédentes, **caractérisé en ce que** l'élément d'amortissement (16) s'appuie radialement à l'extérieur contre une face intérieure de la butée radiale (17) dirigée vers l'interstice (10), et le jeu radial effectif (s') est formé entre l'élément d'amortissement (16) et le noyau de manchon (7), l'élément d'amortissement (16) étant radialement déplaçable par rapport au manchon à collerettes (6), conjointement avec l'élément d'amortissement (11).

10. Dispositif de fixation selon l'une des revendications précédentes, **caractérisé en ce que** le jeu radial effectif (s') est $\leq 0$, de sorte que l'élément d'amortissement (16) repose radialement sans jeu ou sous précontrainte radiale entre le noyau de manchon (7) et la butée radiale (17).

11. Dispositif de fixation selon l'une des revendications précédentes, **caractérisé en ce que** l'élément d'amortissement (16) est un treillis en fil, un tricot en fil, un tissu en fil, un entrelacement en fil ou un tressage en fil, constitué en fil métallique ou en fil plastique, ou bien il est réalisé en mousse métallique ou en mousse plastique.

12. Dispositif de fixation selon l'une des revendications précédentes, **caractérisé en ce que** l'élément de pontage (11) est réalisé en une seule couche comme pièce pliée poinçonnée ou comme pièce emboutie poinçonnée, ou l'élément de pontage (11) est réalisé en plusieurs couches, et au moins une première partie (11) forme la première portion de glissement (19) et une deuxième partie (11b) forme la deuxième portion de glissement (20).

**13.** Dispositif de fixation selon l'une des revendications précédentes,
**caractérisé en ce que**
le manchon à collerettes (6) réunit de manière imperdable au moins l'élément de pontage (11) et l'élément d'amortissement (16), de sorte que le dispositif de fixation (5) peut être prémonté en tant que module et être inséré en tant qu'ensemble uniforme dans un trou de réception (4) de la pièce de protection (1).

**14.** Dispositif de fixation selon l'une des revendications précédentes,
**caractérisé en ce que**
l'élément de pontage (11) comporte des éléments de liaison sous la forme de plusieurs pattes (23, 24) radialement à l'extérieur du manchon à collerettes (6), lesdites pattes (23, 24) étant réalisées d'un seul tenant avec ladite une partie ou avec l'une desdites plusieurs parties (11a, 11b) de l'élément de pontage (11).

**15.** Dispositif de fixation selon l'une des revendications précédentes,
**caractérisé en ce que**
la butée radiale (17), vue en coupe transversale, est disposée en étant inclinée au moins localement d'un angle ($\alpha$) par rapport à la direction axiale (A).

**16.** Dispositif de fixation selon la revendication 16,
**caractérisé en ce que**
l'élément d'amortissement (16) possède au moins une surface oblique (22) réalisée en correspondance de la butée radiale inclinée (17).

**17.** Dispositif de fixation selon l'une des revendications précédentes,
**caractérisé en ce que**
au niveau des portions de glissement (19, 20), l'élément de pontage (11) et/ou les faces intérieures des collerettes (8, 9) présentent des bossages et/ou des creux, de sorte que les portions de glissement (19, 20) s'appuient les unes contre les autres par rapport aux collerettes (8, 9) par contact ponctuel ou linéaire ou par des surfaces de glissement définies.

**18.** Pièce de protection comportant au moins un dispositif de fixation selon l'une des revendications 1 à 17.

Fig. 1

Fig. 2

Fig. 3

EP 3 440 326 B1

Fig. 4

EP 3 440 326 B1

Fig. 5

EP 3 440 326 B1

Fig. 6

Fig. 7

Fig. 8

Fig. 9

Fig. 10

EP 3 440 326 B1

EP 3 440 326 B1

8

6,7

5

30

32

30

32

31

116

11a

30a

A

$D_L$

80

Fig. 11

Fig. 12

EP 3 440 326 B1

Fig. 13

Fig. 14

Fig. 15

EP 3 440 326 B1

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 602004002062 T2
- JP 2013130139 A
- JP 2014148941 A